(19) **Europäisches Patentamt / European Patent Office / Office européen des brevets**

(11) **EP 1 083 743 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(51) Int Cl.:
*H04N 5/32* *(2006.01)*

(21) Anmeldenummer: **00113846.0**

(22) Anmeldetag: **30.06.2000**

(54) **Verfahren zur Farbanpassung eines Röntgenbildes**

Method for adapting the colours of a X-ray image

Méthode d'adaptation des couleurs d'images à rayons X

(84) Benannte Vertragsstaaten:
**DE FR GB IT NL**

(30) Priorität: **09.09.1999 DE 19943183**

(43) Veröffentlichungstag der Anmeldung:
**14.03.2001 Patentblatt 2001/11**

(73) Patentinhaber: **Smiths Heimann GmbH**
**65205 Wiesbaden (DE)**

(72) Erfinder: **Beneke, Knut**
**55270 Ober-Olm (DE)**

(74) Vertreter: **Dietrich, Barbara**
**Thul Patentanwaltsgesellschaft mbH**
**Rheinmetall Platz 1**
**40476 Düsseldorf (DE)**

(56) Entgegenhaltungen:
**US-A- 4 987 584      US-A- 5 253 283**
**US-A- 5 600 303**

## Beschreibung

Die Erfindung betrifft ein Verfahren zur Anpassung der Farben eines Bildes, beispielsweise für ein Röntgenbild, nach dem Oberbegriff des Patentanspruchs 1.

Bei der Durchleuchtung von Objekten mit Röntgenstrahlen werden Gegenstände ihrer Röntgenabsorption entsprechend mit verschiedenen Helligkeiten dargestellt (Grauwertbild). Bei Filmen ergibt sich eine helle Darstellung stark absorbierender Objekte / Gegenstände und eine starke Schwärzung gering absorbierender Objekte /Gegenstände. Bei der elektronischen Bildverarbeitung ist auch eine umgekehrte Darstellung gebräuchlich, also helle Grauwerte für eine schwache Röntgenabsorption.

Zur besseren Identifikation der Materialien, aus denen das Objekt / die Gegenstände bestehen, können diese mit verschiedenen Energien durchleuchtet werden. Aus den Absorptionswerten der unterschiedlichen Energien kann die Materialart des durchleuchteten Objektes oder der Gegenstände bestimmt werden.

Die Materialien des Objektes /Gegenstandes können zur visuellen Bestimmung beispielsweise über unterschiedliche Farben dargestellt werden. Hierbei wird der das Material bestimmenden mittleren Kernladungszahl eine Farbe zugeordnet. Hieraus ergibt sich für das menschliche Auge ein sogenanntes Falschfarbenbild, das sich aus den beiden Informationen, der Absorption und der des Materials, zusammensetzt.

Mit der US 4,987,584 A wird eine Materialprüfanlage beschrieben, die es erlaubt, alle Informationen, die das Bild gebende System liefert, in optimaler Weise zur Verfügung zu stellen. Dazu wird das Prüfgut mit unterschiedlichen Strahlenenergien durchstrahlt. Es werden eine Materialinformation und ein Luminanzsignal gebildet. Die Farbe des Monitorbildes wird durch die Materialinformation und die Bildhelligkeit, die Farbsättigung und der Weißanteil werden durch das Luminanzsignal gebildet.

Werden nun zwei Materialien mit identischer Absorption (Helligkeit) aber unterschiedlichem Material (Farbe) in diesem Falschfarbenbild verglichen, wirken diese für das menschliche Auge unterschiedlich hell, da die Farben für das menschliche Auge für verschiedene Farben unterschiedlich empfindlich ist. So wird ein grünes Objekt viel heller empfunden als ein blaues, wodurch der Anschein entsteht, dass das blaue Objekt einer höheren Absorption unterliegt als das grüne, da das menschliche Auge besonders empfindlich auf Grün, dagegen unempfindlich auf Blau reagiert. Dadurch kommt es zur unangenehmen Sehbelastungen eines Betrachters und zur schlechten Erkennbarkeit von Objekten, die mit dunkler wirkenden Farben dargestellt werden. Letzteres ist gerade bei einem Röntgenbild wichtig, weil hier ja übereinander liegende Gegenstände im Bild als hintereinander liegende Schattierungen erkennbar sein müssen.

Aus der EP 0 523 898 B1, der EP 0 584 690 B1 sowie der EP 0 758 514 B1 sind Vorrichtungen und Verfahren bekannt, die unter Einbeziehung der drei Grundfarben Rot, Grün und Blau nach dem NTSC (National Television System Commitee) Farbbilder im Fernseh- und Videobereich verbessern.

Die Aufgabe der Erfindung besteht darin, ein vom menschliche Auge betrachtetes Farbbild, insbesondere ein Röntgenbild, derart aufzuarbeiten und zu optimieren, daß der Betrachter einer geringeren Sehbelastung unterliegt und die Erkennbarkeit von Gegenständen verbessert wird.

Gelöst wird die Aufgabe durch die Merkmale des Patentanspruchs 1.

Dabei liegt der Erfindung die Idee zugrunde, die Darstellung unterschiedlicher Farben an das Sehverhalten des menschlichen Auges anzupassen, so daß die verschiedene Farben bei gleicher Röntgenabsorption dem menschlichen Auge gleich hell dargestellt werden. Gleich hell heißt also, daß nach Anpassung der Farben an die spektrale Empfindlichkeitskurve des Auges der Betrachter den Eindruck hat, daß die Farben gleich hell sind.

Vorteilhaft ist zudem, daß auch kleinere Bereiche mit einer geringeren Helligkeit vom Betrachter schnell erkannt werden, da diese nach der Helligkeitsanpassung vom menschlichen Auge schneller wahrgenommen werden.

Vorteilhafte Ausführungen sind in den Unteransprüchen enthalten.

So werden die für die Anpassung ermittelten RGB-Werte in Stütztabellen eines Rechners bzw. Prozessors gespeichert, auf die für die Darstellung der Farben auf einem Monitor zugegriffen wird. Dazu werden in den Rechner eine Helligkeitsvorgabe und ein aktueller Farbwert eingelesen, wodurch die RGB-Werte den Stützstellen entnommen werden, die für diese vorgegebene Helligkeit und diesen speziellen Farbwert vorab ermittelt und abgelegt worden sind.

Anhand eines Ausführungsbeispiels mit Zeichnung soll die Erfindung näher erläutert werden.

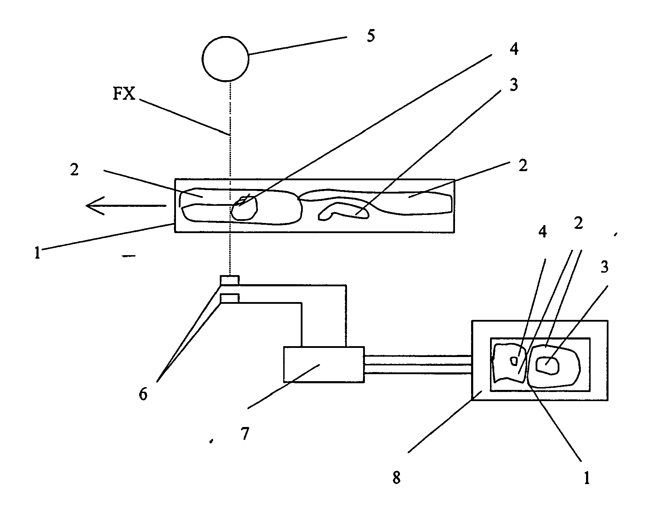

In der einzigen Figur ist ein von Röntgenstrahlen FX einer Röntgenstrahlquelle 5 durchleuchtetes Objekt 1 dargestellt, welches mehrere Gegenstände 2, 3, 4 enthält, und auf einem nicht näher dargestellten Fördermittel durch die Röntgenstrahlen FX bewegt wird. Der Gegenstand 2 besteht beispielsweise aus einem organischen Stoff (Bekleidung) mit einer durchschnittlichen Dicke. Der Gegenstand 3 besteht beispielsweise aus Eisen mit einer Dicke von 3 mm. Der Gegenstand 4 ist (reines) Aluminium mit einer Dicke von 20 mm. Die Gegenstände 2, 3 und 4 absorbieren die Röntgenstrahlen FX unterschiedlich, wobei die Gegenstände 3 und 4 trotz ihre unterschiedlichen Dicken im Beispiel gleiche Absorptionswerte verursachen.

Die Absorption der Röntgenstrahlen FX wird durch Detektoren 6 gemessen und an einen Rechner bzw. Prozessor 7 zur Auswertung und Verarbeitung gegeben. Im Rechner 7 erfolgt in bekannter Art und Weise die Umsetzung der Absorptionswerte zur Grauwertdarstellung. Mit Hilfe der Grauwertdarstellung wird somit das Absorptionsverhalten insbesondere der Gegenstände 2, 3 und 4 auf einem Monitor 8 dargestellt. Bei dieser Grauwertdarstellung auf dem Monitor 8 werden durch das menschliche Auge eines nicht näher dargestellten Betrachters zwischen den Gegenständen 2 und 3 bzw. 2 und 4 unterschiedliche und bei den Gegenständen 3 und 4 gleiche Helligkeiten erkannt.

Um eine visuelle Darstellung der Materialien der Gegenstände 2, 3 und 4 selbst zu ermöglichen, wird in bekannter Art und Weise mittels des Zweienergie-Verfahrens (aus Gründen der Übersichtlichkeit nicht weiter dargestellt) aus den Detektoren 6 ein Signal für die Absorption im höherenergetischen Bereich des Röntgenspektrums und ein separates Signal für die Absorption im niederenergetischen Bereich gemessenen. Aus diesen beiden Signalen wird im Rechner 7 die mittlere Kernladungszahl der Gegenstände 2, 3 und 4 ermittelt und den organischen Materialien mit einer kleinen mittleren Kernladungszahl beispielsweise die Farbe Orange zugeordnet, dem Aluminium mit einer höheren mittleren Kernladungszahl die Farbe Grün und Eisen und Stahl mit einer hohen mittleren Kernladungszahl die Farbe Blau. Je nach Materialdicke oder Materialdichte werden diese Farbtöne dunkel oder hell dargestellt. Das heißt, daß die Dichte oder Dicke der Gegenstände 2, 3 und 4 die scheinbare Helligkeit der jeweiligen Farbe bzw. des jeweiligen Farbtons bestimmen.

Der Gegenstand 2 stellt sich somit in einem Farbbild (Falschfarbenbild) beispielsweise als Hellorange dar. In einem solchen Farbbild würde dann der Gegenstand 3 als ein dunkles Blau und der Gegenstand 4 als ein kräftiges Grün dargestellt werden (wäre der Gegenstand 4 dünner, würde dieser in einem hellen Grün dargestellt werden).

Dabei ergeben sich insbesondere bei der Darstellung der Materialien des Gegenstandes 3 und des Gegenstandes 4 unterschiedlich wahrgenommene Farbintensitäten bezüglich der Helligkeit der Farbe bzw. des Farbtons. Erschien der Gegenstand 3 im Grauwertbildes vorher gegenüber dem Gegenstand 4 gleich hell, da beide die gleiche Absorption besitzen, ist dieser Eindruck nun im Farbbild anders, da sich der Gegenstand 3 in der blauen Farbe darstellt und der Gegenstand 4 in der grünen, wobei die grüne Farbe vom menschlichen Auge viel heller empfunden wird als die blaue Farbe.

Um dieses zu vermeiden, wird nun eine Farbanpassung des gesamten und Teilen des Farbbildes auf das menschliche Auge auf Grundlage der Dreifarbentheorie vorgenommen.

Der Übersichtlichkeit wegen bleibt bei der nachfolgenden Betrachtung der Gegenstand 2 unberücksichtigt.

Vorzugsweise werden die Gegenstände 3 und 4, die bedingt durch die gleiche Absorption eine gleich scheinende Helligkeit besitzen, in der Farbbilddarstellung auf die selbe bzw. annähernd auf die selbe Helligkeit angepaßt. Dies erfolgt unter der Berücksichtigung der bekannten Formel (nach Graßmann)

$$Y = 0{,}299 * R + 0{,}587 * G + 0{,}114 * B,$$

wobei Y die Helligkeit, R die Grundfarbe Rot, G die Grundfarbe Grün und B die Grundfarbe Blau und damit die RGB-Werte eines Farbpixels sind. Die Größen R, G, B und Y besitzen einen Wertebereich von 0,000 bis 1,000.

Für eine annähernd gleiche Helligkeit Y aller Farbpixel, insbesondere jedoch der mit den gleichen Absorptionswerten, wird für jeden Bildpunkt (Pixel) nun der Farbanteil R, G, B ermittelt, der zur Intensitätserhöhung eingestellt bzw. zugemischt werden muß, was nachfolgend beschrieben wird.

Die beiden Gegenstände 3 und 4 weisen bei unterschiedlichen Dicken eine identische Absorption von beispielsweise 60% auf. Aus der Absorption von 60% ergibt sich in bekannter Art und Weise eine Helligkeit von Y = 0,4.

Bedingt durch die mittlere Kernladungszahl wird der Gegenstand 4 in einem grünen Farbton dargestellt. Unter der Bedingung, daß es sich hierbei um eine reines Aluminium handelt, ergeben sich daraus folgende RGB-Werte 0,000 / 0,681 / 0,000 , da im reinen grünen Farbton kein Rot und kein Blau vorhanden sind (0,587 * 0,681 = 0,4).

Der, bedingt durch die mittlere Kernladungszahl, blau darzustellende Gegenstand 3 müßte nun nach der Vorgabe, daß die Helligkeit $Y_G$ für Grün annähernd gleich der Helligkeit $Y_B$ für Blau sein soll, d.h., $Y_G = 0{,}4 = Y_B$, die RGB-Werte

$$0{,}000/ 0{,}000 / 3{,}509 \text{ besitzen } ( 0{,}114 * 3{,}509 = 0{,}4).$$

RGB-Werte über 1,000 sind jedoch nicht möglich.

Deshalb erfolgt unter Zumischung von Rot und/oder Grün und unter Berücksichtigung der Farblehre eine für das Auge visuell wahrnehmbare Helligkeitsanpassung des Gegenstandes 3, in diesem Fall eine Aufhellung des Farbtons Blau, da Blau selbst dunkler als Grün ist. Diese Aufhellung erfolgt vorzugsweise derart, daß der Wert von Rot und Grün in gleichen Bestandteilen am RGB-Wert der blauen Farbe partizipieren. ,

Nach der bereits benannten Formel errechnet sich der notwendige RGB-Wert wie folgt:

$$Y= 0,4= 0,299* 0,323 + 0,587 *0,323 + 0,114 * 1,000 \text{ also}$$
$$RGB= 0,323/0,323/1,000.$$

Dem menschlichen Auge stellt sich der Gegenstand 3 als ein gleichhelles Blau wie das Grün der Gegenstand 4 dar.

Analog kann dieses Verfahren auch auf Mischfarben angewendet werden.

Es ist auch möglich, die Intensität der grünen Farbe abzusenken, wenn dies einer gleichmäßigen Betrachtung durch den Betrachter entgegen kommt. Hierbei ist dann nicht die Helligkeit der grünen Farbe maßgebend, sondern die Helligkeit einer anderen Bezugsfarbe.

In der Praxis werden für die Helligkeitsanpassung Tabellen im Rechner 7 hinterlegt. Diese enthalten entsprechend einem einzustellenden Helligkeitswert für jede Farbe die entsprechenden Farb- bzw. nachzuregelnden RGB-Werte, die vorab , wie beschrieben, ermittelt werden und auf die dann bei der Farbbilddarstellung auf dem Monitor 8 zurückgegriffen wird. Dazu werden in die Tabellen des Rechners 7 die Helligkeitsvorgabe und der aktuelle Farbwert eingelesen. Über drei Ausgänge erfolgt danach die farbige Ansteuerung des Monitors 8 zur Farbbilddarstellung, nunmehr bestehend aus den neu ermittelten RGB-Werten.

Es versteht sich, daß dieses Verfahren nicht auf die Darstellung von Röntgenbilder beschränkt ist. So kann die Helligkeitsanpassung auf das menschliche Auge auch im Video- und Fernsehbereich eingesetzt werden.

## Patentansprüche

1. Verfahren zur Anpassung von Farben eines Bildes, beispielsweise eines Röntgenbildes, auf dem ein Objekt (1) mit Gegenständen (2, 3, 4) abgebildet wird, die in unterschiedlichen Farben dargestellt werden, **dadurch gekennzeichnet, dass**

   - in einem ersten Schritt die Gegenstände (3, 4) mit gleicher Röntgenabsorption ermittelt werden, denen verschiedene Farben zugeordnet wurden,
   - in einem weiteren Schritt je Bildpixel Farbanteile (R,G,B) der Farben für diese ermittelten Gegenstände additiv gemischt werden, wobei die Mischung der Farbanteile (R,G,B) unter Berücksichtigung des Farbempfindens des menschlichen Auges erfolgt, wodurch
   - die Gegenstände (3,4) mit gleicher Röntgenabsorption derart auf einem Monitor (8) dargestellt werden, dass diese bei verschiedenen Farben dem menschlichen Auge gleich hell erscheinen.

2. Verfahren nach Anspruch 1, **dadurch gekennzeichnet, daß** die Speicherung der Farbanteile (R,G,B) in Stütztabellen einer Rechners (7) erfolgt.

3. Verfahren nach Anspruch 1 oder 2, **dadurch gekennzeichnet, daß** für die Helligkeitsanpassung die Intensität der einzelnen Farben angehoben oder abgesenkt wird.

4. Verfahren nach einem oder mehreren der Ansprüche 1 bis 3, **dadurch gekennzeichnet, daß** vor der Helligkeitsanpassung

   - aus zwei unterschiedlichen Energien eine mittlere Kernladungszahl eines Gegenstandes (2, 3, 4) ermittelt wird,
   - diesen Kernladungszahlen Farben zugeordnet werden, wodurch die Gegenstände (2,3,4) farbig darstellbar sind.

## Claims

1. Method for adapting the colours of an image, for example an x-ray image, which depicts an object (1) with artefacts (2, 3, 4) displayed in different colours, **characterized in that**

   - in a first step, those artefacts (3, 4) which were associated with different colours and which have identical x-ray absorption are determined,
   - in a further step, the colour components (R, G, B) of the colours of these determined artefacts are additively mixed in each image pixel, the mixing of the colour components (R, G, B) being carried out under consideration of the colour sensitivity of the human eye, as a result of which
- those artefacts (3, 4) with identical x-ray absorption are displayed on a monitor (8) such that when they are of different colours, the human eye perceives them to have the same brightness.

2. Method according to Claim 1, **characterized in that** the colour components (R, G, B) are stored in look-up tables in a computer (7).

3. Method according to Claim 1 or 2, **characterized in that** the intensity of the individual colours is increased or decreased in order to adapt the brightness.

4. Method according to one or more of Claims 1 to 3, **characterized in that**, prior to adapting the brightness,

- an average nuclear charge number of an artefact (2, 3, 4) is determined from two different energies,
- colours are associated with these nuclear charge numbers, as a result of which the artefacts (2, 3, 4) can be displayed in colour.

**Revendications**

1. Procédé d'adaptation des couleurs d'une image, par exemple d'une image radiographique sur laquelle est formée l'image d'un objet (1) qui présente des éléments (2, 3, 4) représentés en différentes couleurs, **caractérisé en ce que**

- dans une première étape, on détermine les éléments (3, 4) qui ont la même absorption des rayons X et on leur associe différentes couleurs,
- dans une étape ultérieure, on mélange par addition, pixel d'image par pixel d'image, les composantes (R, G, B) des couleurs des objets ainsi déterminés, le mélange des composantes de couleur (R, G, B) étant réalisé en tenant compte de la sensibilité de l'oeil humain aux couleurs, grâce à quoi
- les éléments (3, 4) à même absorption des rayons X sont représentés sur un moniteur (8) de telle sorte qu'ils apparaissent à l'oeil humain avec la même luminosité dans ces différentes couleurs.

2. Procédé selon la revendication 1, **caractérisé en ce que** la mise en mémoire des composantes de couleur (R, G, B) s'effectue dans des tableaux auxiliaires d'un calculateur (7).

3. Procédé selon les revendications 1 ou 2, **caractérisé en ce que** l'intensité des différentes couleurs est rehaussée ou abaissée pour l'adaptation de la luminosité.

4. Procédé selon l'une ou plusieurs des revendications 1 à 3, **caractérisé en ce qu'**avant l'adaptation des luminosités,

- on détermine à partir de deux énergies différentes l'indice moyen de charge du noyau d'un élément (2, 3, 4) et
- des couleurs sont associées à ces indices de charge du noyau, ce qui permet de représenter les éléments (2, 3, 4) en couleurs.

5

FX

4

3

2

2

1

1

2

4

3

6

7

8

1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4987584 A
- EP 0523898 B1
- EP 0584690 B1
- EP 0758514 B1